Europäisches Patentamt

(19) European Patent Office

Office européen des brevets

(11) Publication number: **0 104 020**
**A2**

(12) **EUROPEAN PATENT APPLICATION**

(21) Application number: **83305200.4**

(22) Date of filing: **07.09.83**

(51) Int. Cl.³: **B 65 H 23/24**
**B 65 H 17/08, B 65 H 19/22**

(30) Priority: **09.09.82 ZA 826633**

(43) Date of publication of application:
**28.03.84 Bulletin 84/13**

(84) Designated Contracting States:
**BE CH DE FR GB IT LI NL SE**

(71) Applicant: **AECI LIMITED**
**16th Floor Office Tower Carlton Centre Commissioner Street P.O. Box 1122**
**Johannesburg 2000 Transvaal(ZA)**

(72) Inventor: **Le Maitre, Richard Bruce Carlyle**
**14 Picardy Avenue**
**Somerset West Cape Province(ZA)**

(74) Representative: **Sheller, Alan et al,**
**Imperial Chemical Industries PLC Legal Department: Patents P.O. Box No. 6 Bessemer Road**
**Welwyn Garden City Herts. AL7 1HD(GB)**

(54) **Handling and/or processing of continuous, moving web and method of and apparatus for winding up and embossing such web.**

㉗ A wind-up mechanism 10 comprises a driven wind-up drum 12 having a perforated outer surface 24. A web 34 to be wound up passes around the drum onto a core 22 where it is wound up to form a reel. The core is freely rotatable on a turret 16. A cylinder 20 urges the reel against the drum 12 so that rotation of the drum causes rotation of the reel. The interior of the drum is divided by partitioning into a pressure chamber 28 connected to the delivery of a pump 32, and a suction chamber 30 connected to the suction of the pump. Suction tends to increase frictional adherence of the web to the drum in the region of the suction chamber 30, whereas pressure tends to assist separation of the web from the drum in the region of the pressure chamber 28. A new method of cutting the web and changing over from a completed reel to a new core is also disclosed. Furthermore, an embossing apparatus is disclosed in which a perforated drum such as the drum 12 is used to strip the web from the embosser roller by applying suction to the web to suck it away from the embosser roller.

-1-

Handling and/or processing of continuous, moving web and method of and apparatus for winding up and embossing such web.

THIS INVENTION relates generally to the handling and/or processing of a continuous, moving web. More particularly, the invention relates to a method of and apparatus for winding up a continuous, moving web. Also, more particularly, the invention relates to a method of and apparatus for embossing a continuous, moving web. Also, more particularly, the invention relates to a rotary drum for use in transporting a continuous, moving web.

Existing surface wind-up mechanisms comprise a driven wind-up drum around which a web to be wound up passes. From the wind-up drum the web passes onto a core to form a reel. The reel is urged against the wind-up drum so that rotation of the drum causes rotation of the reel. The tightness with which the web is wound up on the reel, also referred to as the bulk density of the reel, depends on the force with which the reel is urged against the drum. The greater the force, the greater the bulk density.

Certain difficulties are encountered with these mechanisms. One is that the bulk density of the reel cannot be controlled at will. This is so because, when the force with which the reel is urged against the drum is decreased below a certain threshold, the web starts to slip on the drum. Accordingly, a certain minimum force has to be applied. This can lead to what is referred to as telescoping, where the inner layers of the reel are squeezed axially outwardly by the outer layers. This telescoping can be so bad that entire reels have to be scrapped.

Another difficulty arises from the traversing cutter which is normally used to cut the web when changing over from a completed reel to a new core. The traversing cutter is normally located upstream of the wind-up drum. The speed at which it traverses the web has to be sufficiently low in relation to the speed of forward movement of the web so that that side where cutting commences has had time to reach the new core and become attached to that core before the cutter has reached the other side of the web. This leads to an oblique cut which extends at an angle substantially less than $90^{\circ}$ to the direction of movement of the web, and hence long end portions on each reel which cannot normally be used by the end user and have to be discarded.

Furthermore, certain difficulties are encountered in the existing art of embossing thermoplastic webs. One of these difficulties arises when the web is cooled while under tension. When subjected to tension, the web is deformed or strained by stretching, particularly when the web is at the elevated temperature required for embossing to take place. At least part of this deformation by stretching is elastic deformation which is retained or 'memorised' when the web is cooled. This leads to a product which tends to shrink during use, as the 'memory' is slowly being released, particularly if the material is subjected to heat. This tendency to shrink is referred to as dimensional instability. A major area where stretching takes place is where the web is stripped or pulled off the embossing roller used to emboss the web. The web tends to adhere to the embossing roller and, in existing embossing equipment, tension has to be applied to pull it away from the roller.  Failure to pull the web away from the roller under sufficient tension leads to a condition known as 'wrap-around' which, if it has occurred, requires the apparatus to be shut down, the damaged portion of the web to be cut away, the web to be rejoined and the apparatus to be re-started.  In view of the considerable loss in production time and material which this would lead to, the tendency is to run the apparatus at web tensions which are generally higher than they need be at any particular time.  Also, when the apparatus is operating at low web tensions, constant operator supervision is required, whereas, when it operates at high web tensions, the apparatus can be left unattended for periods of time.  This results in operators running the apparatus at web tensions which are higher than they should be. Accordingly, dimensional instability is a real problem.

It is an object of the present invention to overcome or at least alleviate the above difficulties.

According to the invention there is provided, in the handling and/or processing of a continuous, moving web which passes around a rotary drum, a method of increasing/decreasing the frictional adherence of the web to the drum, or assisting separation of the web from the drum, the method comprising having the drum provided with a plurality of perforations leading to the surface of the drum, and applying suction/pressure to the web through the perforations.

The drum may be internally divided into at least two circumferentially spaced sectors, the suction/pressure differing from one said sector to the other.  Suction may be applied to one said sector and pressure to the other.

Further according to the invention there is provided a method of winding up a continuous, moving web, the method comprising :

causing the web to pass around a wind-up drum and and from there onto a core to form a reel; and

urging the reel against the wind-up drum so that rotation of the wind-up drum causes rotation of the reel;

the drum having a perforated outer surface and the method including applying suction to the web via said perforated surface.

Pressure, or neither suction nor pressure, may be applied to the web via said perforated surface in the region where the reel is urged against the wind-up drum.

Upon changing reels :

the web may be cut to form a trailing end of the completed reel and a leading end for attachment to a new core to form a new reel;

an adhesive applied to the core and/or to the web in the region of the cut, either before or after the web is cut;

the new core displaced towards and brought into engagement with the web on the drum upstream of the completed reel, after the web has been cut, so that said leading end becomes attached to the new core by the adhesive and winding up of the new core commences; and

the completed reel displaced away from and out of engagement with the drum.

By displacement of the completed reel and/or the new core, while in egagement with the drum, circumferentially in the direction of rotation of the drum, the new core may be brought into the same circumferential position as previously occupied by the completed reel.

The web may be cut in at least two stages, namely a first stage in which a plurality of longitudinally spaced cuts which together extend across the entire width of the web are made, and a second stage in which a plurality of longitudinally extending cuts are made which interconnect the longitudinally spaced cuts.

Alternatively, the web may be cut by means of a traversing cutter which traverses the full width of the web in a time less than that required for the web to travel from the cutter to the new core.

Further according to the invention, in the winding up of a continuous, moving web wherein the web is caused to pass around a wind-up drum and from there onto a core to form a reel, and wherein the reel is urged against the wind-up drum so that rotation of the wind-up drum causes rotation of the reel, there is provided a method of changing reels which comprises :
    cutting the web to form a trailing end of the completed reel and a leading end for attachment to a new core to form a new reel;
    applying an adhesive to the core and/or to the web in the region of the cut, either before or after the web is cut;
    displacing the new core towards and bringing it into engagement with the web on the drum upstream of the completed reel, after the web has been cut, so that said leading end becomes attached to the new core by the adhesive and winding up of the new core commences;

and

displacing the completed reel away from and out of engagement with the drum.

Further according to the invention there is provided a method of embossing a continuous, moving web in which the web passes through the nip between an embosser roller and a counter bole, and in which the embossed web is then stripped from the embosser roller by means of a stripper roller, the method comprising :
having the stripper roller provided with a perforated outer surface;
urging the stripper roller against the embosser roller in an engagement zone, to form a nip through which the web passes; and
applying suction via said perforated surface to the web in said engagement zone.

Said perforated surface may be formed by a material which is resiliently deformable to a substantially greater extent than that to which the material of the embosser roller is deformable.

Further according to the invention there is provided a rotary drum for use in transporting a continuous, moving web, the drum being hollow and having a plurality of perforations leading from the hollow interior of the drum to the outer surface thereof, and there being partitioning in the hollow interior which divides the hollow interior into at least two circumferentially spaced chambers, the drum being rotatable with respect to the partitioning.

Further according to the invention there is provided apparatus for transporting a continuous, moving web, the apparatus comprising a rotary drum as

-7-

defined above, and a pump connected to one of said chambers to apply either suction or pressure to that chamber.

A suction inlet of the pump may be connected to one of said chambers to apply suction to that chamber, and a delivery outlet of the pump connected to the other chamber to apply pressure to that other chamber.

Further according to the invention there is provided a wind-up mechanism for winding up a continuous, moving web, the mechanism comprising :

a driven rotary drum around which the web can pass onto a core to form a reel;

means for urging the reel against the drum so that, upon rotation of the drum, the web is wound up on the reel;

the reel having a perforated outer surface and there being provided a pump for applying suction to the web via said perforated surface.

The drum may be hollow, there being provided partitioning in the hollow interior of the drum, the partitioning dividing the hollow interior into at least two circumferentially spaced chambers and the drum being rotatable with respect to the partitioning.

The partitioning may be displaceable about the axis of rotation of the drum.

Further according to the invention there is provided embossing apparatus for embossing a continuous, moving web, the apparatus comprising :

an embosser roller;

a counter bole co-operating with the embosser roller to form a nip through which the web passes when being embossed;

a stripper roller for stripping the embossed web from the embosser roller, the stripper roller having a perforated outer surface;

means for urging the stripper roller against the embosser roller, with the web passing between the embosser roller and the stripper roller; and

means for applying suction to the web via said perforated outer surface.

The outer surface of the stripper roller may be formed by a material which is resiliently deformable to a substantially greater extent than that to which the material of the embosser roller is deformable.

The invention will now be described in more detail, by way of example, with reference to the accompanying drawings.

In the drawings :

Figure 1 is a diagrammatic side view of a surface wind-up mechanism in accordance with the invention, shown at a stage when winding up on a new core has just commenced;

Figure 2 shows the wind-up mechanism of Figure 1 at a stage when winding up on the core is nearing completion;

Figure 3 shows the wind-up mechanism of Figure 1 during a first phase of changing over from a completed reel to a new core;

Figure 4 shows the wind-up mechanism of Figure 1 during a second phase of changing over from a completed reel to a new core;

Figure 5 is a broken, axial section of a wind-up drum forming part of the wind-up mechanism illustrated in Figures 1 to 4;

Figure 6 is a cross section of part of the wind-up drum, taken on line VI-VI in Figure 5 (and drawn to a larger scale);

Figure 7 is a diagrammatic side view of a web cutting mechanism associated with the wind-up mechanism;

Figure 8 shows the cuts made in a web by the cutting mechanism of Figure 7;

Figure 9 shows an alternative arrangement of cuts in a web; and

Figure 10 is a side view of an embosser making use of a perforated stripper roller in accordance with the invention.

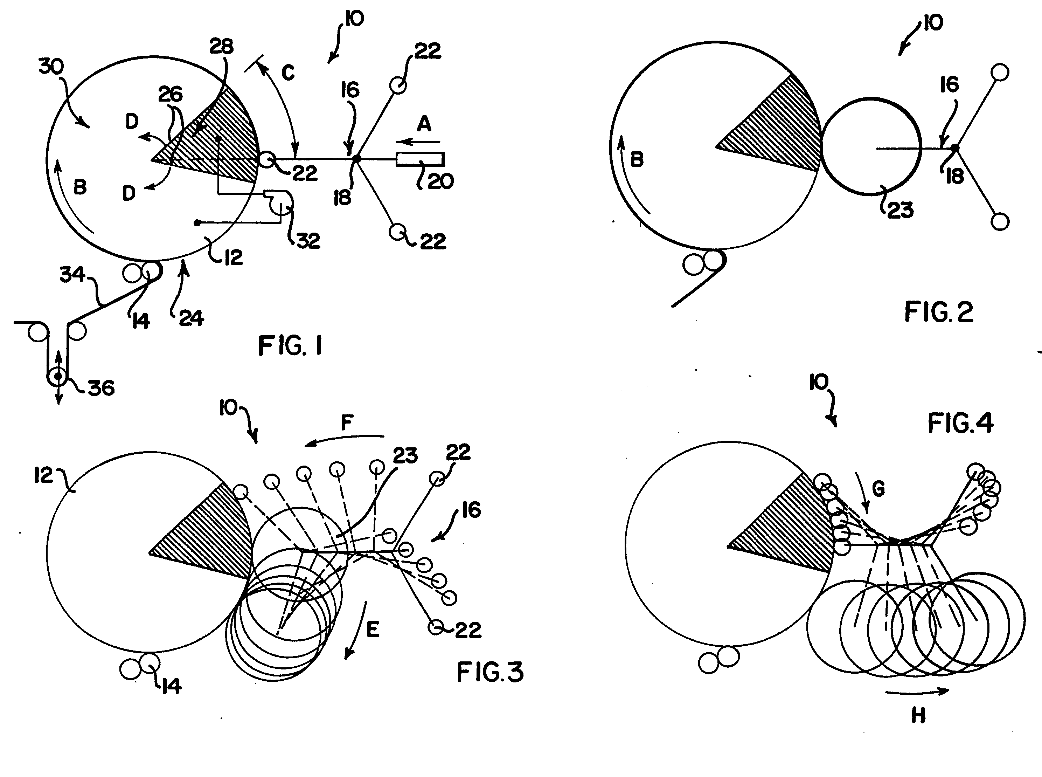

Referring first to Figures 1 to 4 of the drawings, reference numeral 10 generally indicates a surface wind-up mechanism which comprises a wind-up drum 12, a lay-on roller 14, and a turret 16. The turret is mounted on a carriage (not shown) and is rotatable with respect to the carriage about an axis 18 parallel to the axis of rotation of the drum 12. The carriage is displaceable towards or away from the drum 12, and a pneumatic or hydraulic cylinder 20 is provided for urging the turret towards the drum in the direction of arrow A. The turret 16 carries three replaceable cores 22 in a freely rotatable manner.

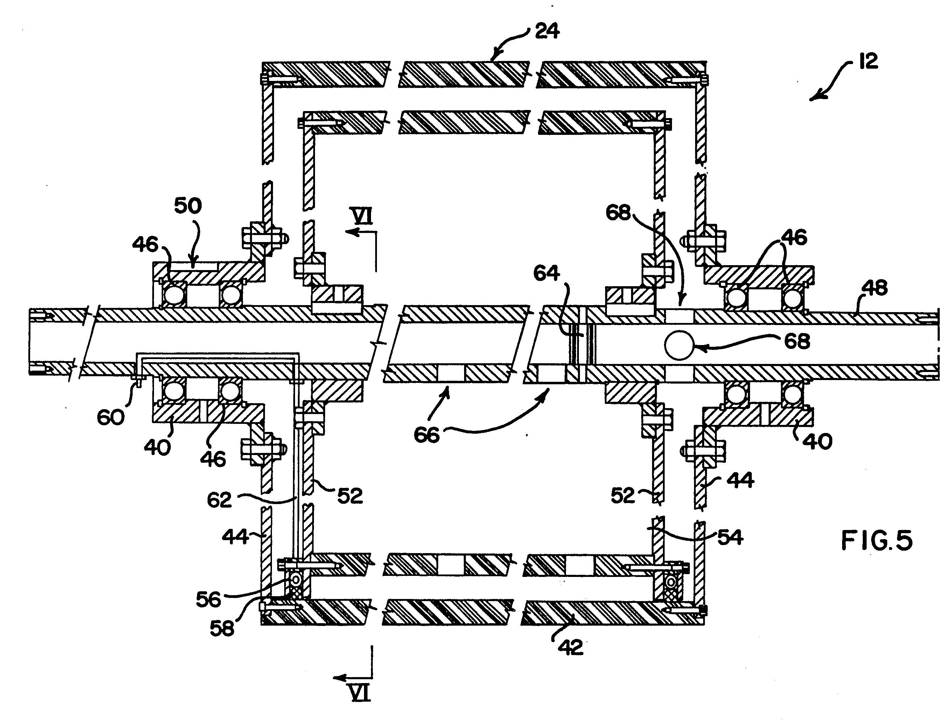

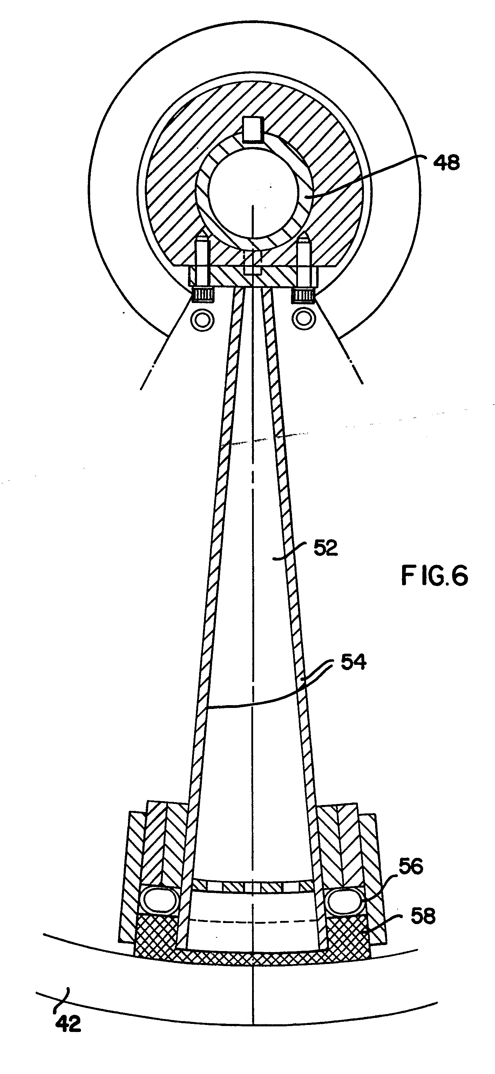

As will be described in more detail later, with reference to Figures 5 and 6, the wind-up drum 12 is hollow and has a perforated outer surface 24. Inside the hollow interior of the drum there is provided partitioning 26 which divides the interior of the drum into two circumferentially spaced chambers namely a pressure chamber 28 (shown shaded) and a suction chamber 30. The wind-up drum 12 is rotatable with respect to the partitioning 26. A pump 32 is provided which has its suction connected to the suction chamber 30, and its delivery to the pressure chamber 28.

During normal winding up, the turret 16 is restrained from rotating about the axis 18. When changing over from a completed reel to a new core, rotation is permitted, as will be described in more detail later.

At the start of a winding up operation, the leading end of a continuous, moving web 34 of a material such as pvc or a pvc/fabric laminate is attached adhesively to a new core, i.e. the one which, in Figure 1, is shown in position against the drum 12. The method of attachment will be described in more detail later. The drum is driven in the direction of arrow B (clockwise) and the core 22 in question urged against the drum by means of the cylinder 20. Engagement of the core 22 with the drum 12 will cause the core to rotate in an anti-clockwise direction and the web 34 to be reeled up on the core 22 to form a reel 23 (see Figure 2).

The suction applied to the suction chamber 30 draws the web 34 against the surface of the drum, thus increasing the frictional adherence of the web to the drum. As a result of this frictional adherence, the web is unable to shrink until it has reached the beginning of the pressure chamber 28. Accordingly, any strain in the web as a result of tension immediately upstream of the lay-on roller 14, is retained until the web has reached the beginning of the pressure chamber 28. It will be appreciated that the tension in the web immediately upstream of the lay-on roller 14 can be controlled accurately by means such as, for example, a dancing roller illustrated at 36 in Figure 1. The pressure applied to the pressure chamber 28, on the other hand, tends to cause separation of the web 34 from the surface of the wind-up drum, so that, from the beginning of the pressure chamber 28, the web can start contracting, thereby causing release of any strain set up in it as a result of tension in the web immediately upstream of the lay-on roller 14. As is known, the release of strain in webs of plastics material such as PVC is not immediate. It takes a certain amount of time. By adjusting the partitioning 26 so as to increase the angle C, the extent to which the strain is released can be increased. Conversely, by decreasing the angle C, the extent to which the strain is released can be decreased.

The eventual tightness or bulk density of the reel 23 depends essentially on two factors, namely on the residual strain in the web upon being wound up on the reel, and on the force with which the reel is urged against the drum. Tightness as a result of the first factor arises from the web tending to contract slowly after it has been wound up as a result of the residual strain slowly being released. Tightness as a result of the second factor arises because the reel generally has a diameter which is smaller than that of the wind-up drum. Pressure of the reel against the drum causes the reel to be compressed to form a concave portion on the reel, which concave portion has a radius of curvature corresponding to that of the drum. Upon release of the pressure, the concave portion reverts to a convex shape having a radius of curvature corresponding to that of the reel at that point. As the latter radius of curvature is generally smaller than the former radius of curvature, the web is effectively stretched to a certain extent.  The greater the force applied by the cylinder 20, the greater this effect. A constant tension of the web on the reel from immediately adjacent the core to the surface of the completed reel, can be obtained by suitably adjusting the angle C and the force applied by the cylinder 20 as the diameter of the reel increases.

When the reel 23 has neared completion (see Figure 2), the turret 16 is allowed to rotate and this, in conjunction with the force applied by the cylinder 20, causes the reel to move around the drum in the direction of arrow E in Figure 3, whilst the next core on the turret moves towards the drum in the direction of arrow F in Figure 3, until both the completed reel and the new core are held against the drum.  In the meantime the web will have been cut and adhesive applied to it as will be described in more detail later.  The new core will pick up the leading end (behind the cut) of the web, whilst the trailing end (ahead of the cut) will be pulled through onto the completed reel.

Thereafter, the cylinder 20 is retracted, allowing the new core to move around the drum in the direction of arrow G (Figure 4) and the completed reel to move away from the drum in the direction of arrow H (Figure 4).  The new core will now occupy the position previously occupied by the completed reel and the process as described above will repeat itself. The completed reel can now be unloaded from the turret 16 and a new core loaded onto the turret in its place.

Referring now to Figures 5 and 6, the wind up drum 12 is illustrated in more detail.  The drum comprises a pair of hubs 40, a perforated cylindrical wall 42, and side walls 44 extending between the hubs and the cylindrical wall. The hubs 40 house ball bearings 46 whereby the drum is rotatable on a hollow shaft 48. The shaft 48 itself is pivotal about its axis (i.e. the axis of rotation of the drum 12) by being mounted in plummer blocks (not shown). This will allow for adjustment of the partitioning 26 in the direction of arrows D (see Figure 1) in order to change the angle C as hereinbefore described. The left hand hub 40 is provided with a key way 50 whereby drive gear (not shown) can be connected to the drum in order to drive the drum.

The perforated surface 24 referred to in Figures 1 to 4 may be provided by the cylindrical wall 42 itself. Alternatively, the wall 42 may be provided with relatively large perforations, the perforated surface being formed by an outer liner having relatively small perforations communicating with the perforations in the wall 42. The lining may, for example, be formed by a sheet of elastomeric material such as silicone rubber which has been provided with a large number of pin-hole perforations. Alternatively, it may be formed by a sheet of fabric material. It could even be of metal, such as a finely woven metal fibre sheet or a layer of porous, sintered metal if the drum is to be used in a high temperature environment.

The partitioning 26 in the interior of the drum 12 comprises two axially spaced cheek plates 52 which are keyed to the shaft 48, and two circumferentially spaced partition plates 54, the plates 52 and 54 together with the inside surface of the cylindrical wall 42 defining the pressure chamber 28 referred to earlier. The remainder of the interior of the drum 12 forms the suction chamber 30 referred to earlier.

-14-

At the radially outer ends of the plates 52, 54, there is formed a groove within which there is located first an expandible tube 56 and then a sealing member 58. The tube 56 can be pressurised via a connection 60 and a pipe 62. When the tube 56 is pressurised, it exerts pressure against the sealing member 58, urging the sealing member into sealing engagement with the inner cylindrical surface of the cylindrical wall 42.

It will be seen in Figure 5 that the interior of the hollow shaft 48 is divided in two by means of a plug 64. On the left hand side of the plug 64, the interior of the hollow shaft 48 is in communication with the pressure chamber 28 by means of openings 66 in the side of the shaft, whereas, on the right hand side of the plug 64, the interior of the shaft is in communication with the suction chamber by means of openings 68 in the side of the shaft. Accordingly, the pump 32 (Figure 1) will have its suction connected to the right hand side of the shaft 48 and its delivery to the left hand side of the shaft.

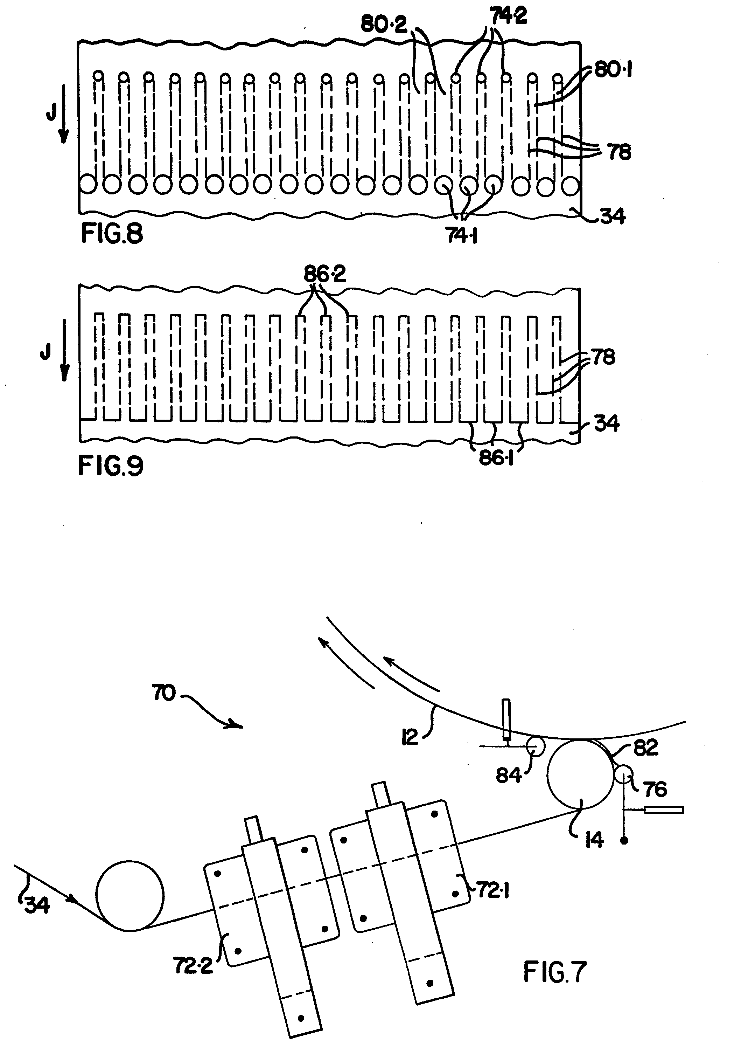

Referring now to Figures 7 and 8, reference numeral 70 generally indicates a cutting mechanism. The cutting mechanism comprises two longitudinally spaced punching devices 72.1 and 72.2. The punching device 72.1 is adapted to punch a transversely extending row of holes 74.1 in the web 34, whereas the punching device 72.2 is adapted to punch a transversely extending row of holes 74.2 in the web. The holes 74.1 and 74.2 together extend across the entire width of the web, but the holes 74.1 are spaced longitudinally from the holes 74.2 so that that part of the web ahead of the holes 74.1 remains attached to that part of the web behind the holes 74.2 (the direction of movement of the web being indicated by arrow J in Figure 8).

Adjacent the lay-on roller 14 there is provided a row of transversely spaced circular cutters 76 which are adapted to cut the web along the dotted lines 78 shown in Figure 8, thus severing the connection between that part of the web ahead of the holes 74.1 and that part of the web behind the holes 74.2, there being a series of interleaving tongues 80.1 and 80.2, the tongues 80.1 being connected to the trailing end of the web and the tongues 80.2 being connected to the leading end of the web. A guide 82 is provided to guide the tongues 80.2 onto the drum 12. The longitudinal distance between the openings 74.1 and 74.2 is such that the leading ends of the tongues 80.2 will have reached the drum 12 and become attached thereto through suction before the circular cutters 76 have reached the openings 74.2. This will prevent separation between the leading and trailing ends of the web. An adhesive applying roller 84 is arranged to apply adhesive to the web, in the region between the holes 74.1 and 74.2, as this part of the web moves with the drum 12 to the beginning of the pressure chamber 28. Although adhesive is required only on the tongues 80.2, it does not matter that adhesive is also applied to the tongues 80.1 as the force with which the web is wound onto the nearly completed reel 23 is sufficient to tear the tongues 80.1 from the new core 22. The tongues 80.2 will, however, immediately become attached to the new core 22 and ensure that the leading end of the web is taken up on the new core.

In an alternative arrangement (not shown) the punching devices 72.1 and 72.2 may be omitted and the circular cutters 72 replaced by a single, traversing cutter. Such a traversing cutter may be mounted on a carriage which is arranged to traverse the width of the web and, by engagement with the lay-on roller 14, cut the web across its entire width. As the cutter will have a finite speed of transverse movement, the resulting cut will be at an angle of less than $90^{\circ}$ to the direction of movement of the web, the angle depending on the speed of movement of the cutter in relation to the speed of movement of the web. Provided that side of the web where transverse cutting commences has had time to reach the drum 12 and become attached to the drum before the cutter has reached the other side of the web, the leading and trailing ends of the web will not separate. This permits a relatively high speed of transverse movement of the cutter ensuring a transverse cut which is relatively close to $90^{\circ}$ to the direction of movement of the web. Instead of the guide 82, the carriage on which the transverse cutter is mounted may be provided with a brush which is effective to guide the web ends around the lay-on roller 14 onto the drum 12.

Referring now to Figure 9, there is shown a system of cutting wherein, instead of holes being punched into the web as indicated in Figure 8, short, transversely extending cuts 86.1 and 86.2 are made. As with the embodiment illustrated in Figures 7 and 8, longitudinally extending cuts are subsequently made along dotted lines 78 by transversely spaced circular cutters 76.

In yet a further alternative arrangement, the drum 12 may carry a cutting device, such as a blade or heated wire normally accommodated in a recess in its cylindrical surface, the cutting device being brought into operation by causing it to protrude from the recess. This will enable a cut extending at 90° to the direction of web movement to be effected.

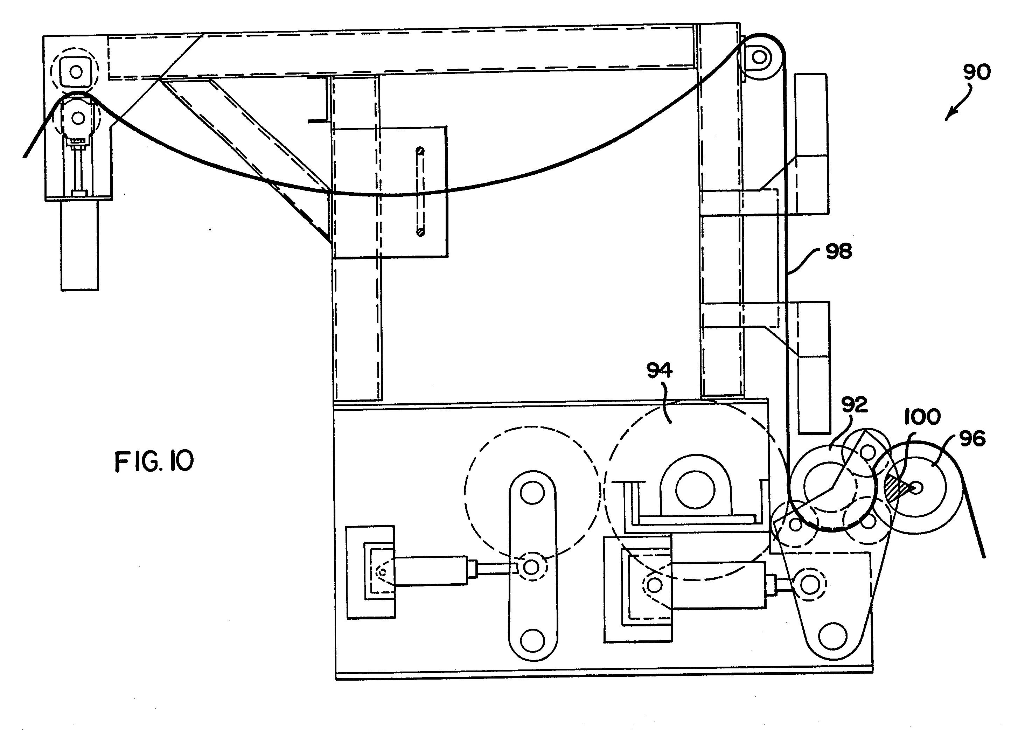

Referring now to Figure 10, reference numeral 90 generally indicates an embosser comprising an embosser roller 92, a counter bole 94, and a stripper roller 96.

A web 98 to be embossed is heated and fed downwardly into a nip formed between the embosser roller 92 and the counter bole 94. The web moves around the embosser roller 92 through a further nip formed between the embosser roller and the stripper roller 96.

The stripper roller has a construction similar to that described with reference to Figures 5 and 6, although, in its application in an embosser, the perforated surface is preferably formed by a relatively thick outer liner of silicone rubber. The embosser roller will usually be of steel. Thus, when the stripper roller 96 is urged against the embosser roller 92, the embosser roller will cause substantial compression of the silicone liner, providing for a substantial area of contact. The perforations in the silicone liner may be such that they form circumferentially extending slots at the outer surface. The length of the slots should be slightly shorter than the circumferential length for which the stripper roller 96 remains in contact with the embosser roller 92. For example, if the length of contact is about 2 cm, then the length of the slots could be about 1 cm. The partitioning 26 (see Figure 1) and the way in which the pump 32 is connected, is arranged such that suction is applied only across a relatively narrow sector of the stripper roller 96, i.e. the sector diagrammatically indicated by shading at 100 in Figure 10.

Thus, it will be seen that, instead of the web 98 being stripped from the embosser roller 92 by means of applying tension to the web, the web is sucked off the embosser roller. This will substantially prevent straining of the web 98 at a point where it is still relatively hot.

CLAIMS:

19

1.      In the handling and/or processing of a continuous, moving web (34, 98) which passes around a rotary drum (12, 96), a method of increasing/decreasing the frictional adherence of the web to the drum, or assisting separation of the web from the drum, the method being characterised thereby that the drum is provided with a plurality of perforations leading to the surface (24) of the drum, and that suction/pressure is applied to the web through the perforations.

2.      A method as claimed in claim 1, characterised thereby that the drum (12, 96) is internally divided into at least two circumferentially spaced sectors (28, 30) and that the suction/pressure differs from one said sector to the other.

3.      A method as claimed in claim 2, characterised thereby that suction is applied to one said sector (30) and pressure to the other (28).

4.      A method of winding up a continuous, moving web (34), the method comprising  :  causing the web to pass around a wind-up drum (12) and from there onto a core (22) to form a reel (23);  and urging the reel against the wind-up drum so that rotation of the wind-up drum causes rotation of the reel;  characterised thereby that the drum is provided with a perforated outer surface (24) and that suction is applied to the web via said perforated surface.

5.      A method as claimed in claim 4, characterised thereby that pressure, or neither suction nor pressure, is applied to the web via said perforated surface in the region (28) where the reel is urged against the wind-up drum.

2O

6. A method as claimed in claim 4 or claim 5, characterised thereby that, upon changing reels:

the web is cut to form a trailing end of the completed reel (23) and a leading end for attachment to a new core (22) to form a new reel;

an adhesive is applied to the core and/or to the web in the region of the cut, either before or after the web is cut;

the new core is displaced towards (F) and brought into engagement with the web on the drum upstream of the completed reel, after the web has been cut, so that said leading end becomes attached to the new core by the adhesive and winding up of the new core commences; and

the completed reel is displaced away from (H) and out of engagement with the drum.

7. A method as claimed in claim 6, characterised thereby that, by displacement of the completed reel and/or the new core, while in engagement with the drum, circumferentially in the direction of rotation of the drum, (E, G), the new core is brought into the same circumferential position as previously occupied by the completed reel.

8. A method as claimed in claim 6 or claim 7, characterised thereby that the web is cut in at least two stages, namely a first stage in which a plurality of longitudinally spaced cuts (74.1, 74.2, 86.1, 86.2) which together extend across the entire width of the web are made, and a second stage in which a plurality of longitudinally extending cuts are made which interconnect the longitudinally spaced cuts.

9. A method as claimed in claim 6 or claim 7, wherein the web is cut by means of a traversing cutter which traverses the full width of the web in a time less than that required for the web to travel from the cutter to the new core.

10.      In the winding up of a continuous, moving web (34) wherein the web is caused to pass around a wind-up drum (12) and from there onto a core (22) to form a reel (23), and wherein the reel is urged against the wind-up drum so that rotation of the wind-up drum causes rotation of the reel, a method of changing reels which comprises  :  cutting the web to form a trailing end of the completed reel and a leading end for attachment to a new core to form a new reel;  and applying an adhesive to the core and/or to the web in the region of the cut, either before or after the web is cut;  characterised thereby that the new core is displaced towards and brought into engagement (F) with the web on the drum upstream of the completed reel, after the web has been cut, so that said leading end becomes attached to the new core by the adhesive and winding up of the new core commences;  and that the completed reel is displaced away from and out of engagement (H) with the drum.

11.      A method of embossing a continuous, moving web (98) in which the web passes through the nip between an embosser roller (92) and a counter bole (94), and in which the embossed web is then stripped from the embosser roller by means of a stripper roller (96), characterised thereby that the stripper roller is provided with a perforated outer surface;  that the stripper roller is urged against the embosser roller in an engagement zone, to form a nip through which the web passes;  and that suction is applied via said perforated surface to the web in said engagement zone.

0104020

22

12.        A method as claimed in claim 11, characterised thereby that said perforated surface is formed by a material which is resiliently deformable to a substantially greater extent than that to which the material of the embosser roller is deformable.

13.        A rotary drum (12, 96) for use in transporting a continuous, moving web (34, 98), characterised thereby that the drum is hollow and has a plurality of perforations leading from the hollow interior of the drum to the outer surface thereof, and that there is partitioning (26) in the hollow interior which divides the hollow interior into at least two circumferentially spaced chambers (28, 30), the drum being rotatable with respect to the partitioning.

14.        Apparatus comprising a rotary drum (12) for transporting a continuous, moving web (34), characterised thereby that the drum is a drum as claimed in claim 13, and that a pump (32) is connected to one of said chambers to apply either suction or pressure to that chamber.

15.        Apparatus as claimed in claim 14, characterised thereby that a suction inlet of the pump (32) is connected to one of said chambers to apply suction to that chamber, and wherein a delivery outlet of the pump is connected to the other chamber to apply pressure to that other chamber.

16.        A wind-up mechanism for winding up a continuous, moving web (34), the mechanism comprising : a driven rotary drum (12) around which the web can pass onto a core (22) to form a reel (23); and means (20) for urging the reel against the drum so that, upon rotation of the drum, the web is wound up on the reel;

23

characterised thereby that the reel has a perforated outer surface (24) and that there is provided a pump (32) for applying suction to the web via said perforated surface.

17.       A wind-up mechanism as claimed in claim 16, characterised thereby that the drum (12) is hollow, and that there is provided partitioning (26) in the hollow interior of the drum, the partitioning dividing the hollow interior into at least two circumferentially spaced chambers (28, 30) and the drum being rotatable with respect to the partitioning.

18.       A wind-up mechanism as claimed in claim 17, characterised thereby that the partitioning (26) is displaceable about the axis of rotation of the drum (12).

19.       Embossing apparatus for embossing a continuous, moving web (98), the apparatus comprising : an embosser roller (92); a counter bole (94) co-operating with the embosser roller to form a nip through which the web passes when being embossed; and a stripper roller (96) for stripping the embossed web from the embosser roller; characterised thereby that the stripper roller has a perforated outer surface; that means are provided for urging the stripper roller against the embosser roller, with the web passing between the embosser roller and the stripper roller; and that means are provided for applying suction to the web via said perforated outer surface.

20.       Embossing apparatus as claimed in claim 19, characterised thereby that the outer surface of the stripper roller is formed by a material which is resiliently deformable to a substantially greater

24

extent than that to which the material of the embosser
roller is deformable.

**FIG.2**

**FIG.4**

**FIG.1**

**FIG.3**

FIG.5

0104020

FIG.6

0104020

FIG.8

FIG.9

FIG.7

FIG. 10

90

98

94

92

100

96